# EUROPEAN PATENT APPLICATION

(11) **EP 4 661 283 A1**
(43) Date of publication of application: **10.12.2025**
(21) Application number: 24767157.1
(22) Date of filing: 05.03.2024
(51) Int. Cl.: H02P 29/00, G05B 11/36

(54) **SERVO PARAMETER ADJUSTMENT METHOD AND ADJUSTMENT DEVICE**

(30) Priority: 07.03.2023 JP 2023034757
(71) Applicant: OMRON Corporation, Kyoto 600-8530 (JP)
(72) Inventor: HARADA, Hiroyuki, Kyoto-shi, Kyoto 600-8530 (JP); NAKAJIMA, Kenji, Kyoto-shi, Kyoto 600-8530 (JP); ONO, Yasushi, Kyoto-shi, Kyoto 600-8530 (JP); TAKAMUKU, Hideyuki, Kyoto-shi, Kyoto 600-8530 (JP); KAIDA, Sota, Kyoto-shi, Kyoto 600-8530 (JP); URABE, Kentaro, Kyoto-shi, Kyoto 600-8530 (JP)
(74) Representative: Isarpatent
(86) International application number: PCT/JP2024/008373
(87) International publication number: WO 2024/185790

(57) **Abstract**

An adjustment method for a servo parameter includes a first step of acquiring, in a target device with the motor attached, a frequency characteristic of the motor under characteristic acquisition conditions related to the frequency characteristic of the motor and including at least a first condition and a second condition different from each other; a second step of interpolating, based on a first frequency characteristic corresponding to the first condition and a second frequency characteristic corresponding to the second condition, a third frequency characteristic which is a frequency characteristic corresponding to a predetermined section related to a resonance region; a third step of generating, based on the first frequency characteristic, the second frequency characteristic, and the third frequency characteristic, a frequency characteristic block serving as a reference for adjusting the servo parameter; and a fourth step of adjusting, based on the frequency characteristic block, the servo parameter.

## Description

### TECHNICAL FIELD

The present invention relates to a servo parameter adjustment method and an adjustment device.

### BACKGROUND OF INVENTION

In an equipment device to which a motor or the like for driving a load is attached, servo parameters (a position gain, a speed gain, a cutoff frequency of a filter, and the like) of a servo driver are typically adjusted in order to appropriately perform servo control of the motor. As such a servo parameter adjustment method, an adjustment method performed by actually driving the motor or a load device is typically adopted. In this case, the servo parameters are adjusted by setting the servo parameter in a motor control device such as a servo driver, measuring the frequency response of the motor in accordance with the servo parameters, and determining whether the servo parameters are appropriate.

For example, in the related art disclosed in Patent Document 1, a maximum envelope curve of a gain and a minimum envelope curve of a phase are calculated based on shifts of the gain and the phase included in a frequency characteristic of a motor acquired under a plurality of different conditions, and servo parameters are adjusted using the maximum envelope curve of the gain and the minimum envelope curve of the phase. Patent Document 2 discloses a technique of searching for a center frequency of a notch filter for suppressing vibration due to resonance, assuming that a resonance frequency that varies depending on a load state of a device incorporated with a motor is one resonance frequency.

### CITATION LIST

### PATENT LITERATURE

Patent Document 1: JP 2009-282609 A
Patent Document 2: JP 2007-185014 A

### SUMMARY

### TECHNICAL PROBLEM

To adjust the servo parameters for servo control of a motor, typically, a corresponding motor is driven on a control axis of a target device actually including the motor and a load, a frequency characteristic and the like of the motor is measured, and suitable servo parameters are sought based on the measurement result. When the servo parameters are adjusted by such a method, a suitable control characteristic can be expected in a state in which the target device exhibits a desired frequency characteristic. However, in the target device, the mechanical characteristic such as the mechanical rigidity of the target device varies due to a change in a load position, a temporal factor, or the like, and thus a structural situation inside the machine is not always constant. Therefore, even when the servo parameters are adjusted so that the desired frequency characteristic is exhibited by putting the target device into a specific state, the control state of the motor may be unstable when the target device deviates from the specific state.

Since the target device has one or more control axes, the device is placed in various situations during operation, and it takes a lot of time to measure the frequency characteristic in each control axis and adjust the servo parameters assuming all the situations. This is not necessarily preferable from the viewpoint of work efficiency.

The present invention has been made in view of the above-described problems, and an object thereof is to provide a technique for implementing suitable adjustment of a servo parameter in consideration of variations in a frequency characteristic in a target device as much as possible.

### SOLUTION TO PROBLEM

An adjustment method for a servo parameter according to one aspect of the present invention is a method for adjusting a servo parameter related to servo control of a motor and includes: a first step of acquiring, in a target device with the motor attached, a frequency characteristic of the motor under characteristic acquisition conditions related to the frequency characteristic of the motor and including at least a first condition and a second condition different from each other; a second step of interpolating, based on a first frequency characteristic corresponding to the first condition and a second frequency characteristic corresponding to the second condition, a third frequency characteristic which is a frequency characteristic corresponding to a predetermined section related to a resonance region in the frequency characteristic of the motor; a third step of generating, based on the first frequency characteristic, the second frequency characteristic, and the third frequency characteristic, a frequency characteristic block serving as a reference for adjusting the servo parameter; and a fourth step of adjusting, based on the frequency characteristic block, the servo parameter.

The above adjustment method is a method for adjusting a servo parameter related to servo control of a motor for driving a control axis of a target device. Examples of the servo parameter include a position loop gain and a speed loop gain that correspond to the control axis and a parameter related to a filter for vibration suppression (e.g., a cutoff frequency). For example, a predetermined servo parameter is adjusted so as to suppress a disturbance of a gain (a peak gain, a resonance point, or the like near a control band) that can be grasped from a frequency characteristic.

Here, in the first step, a frequency characteristic to be referred to in adjusting the servo parameter is acquired. Examples of the frequency characteristic include a gain transition and a phase shift represented in a so-called Bode diagram. A condition for the target device in acquiring the frequency characteristic of the motor on the control axis is a characteristic acquisition condition, and in the first step, at least two conditions, that is, the first condition and the second condition are set as the characteristic acquisition condition. These conditions are conditions under which different frequency characteristics are expected, and preferably, the frequency characteristics corresponding to the both conditions (the first frequency characteristic and the second frequency characteristic) are boundary characteristics in a variation range of the frequency characteristic on the control axis, and the first condition and the second condition are boundary conditions corresponding to the boundary characteristics. The boundary conditions may be a positional condition, a temporal condition, or other conditions.

In the second step, the third frequency characteristic corresponding to a predetermined section is interpolated based on the first frequency characteristic and the second frequency characteristic. The predetermined section is a section related to a resonance region in the frequency characteristic of the motor. Since the vibration in the target device tends to be significant in the resonance region, it is preferable to focus on the behavior of the target device in the predetermined section related to the resonance region in adjusting the servo parameter from the viewpoint of the stability in the servo control. The third frequency characteristic is a frequency characteristic corresponding to the predetermined section and is a frequency characteristic assumed from the first frequency characteristic and the second frequency characteristic. The interpolation of the third frequency characteristic may use various interpolation methods and is not limited to a specific method. That is, the third frequency characteristic is interpolated as a frequency characteristic corresponding to a condition other than the first condition and the second condition.

Next, in the third step, a frequency characteristic block is generated based on the first frequency characteristic, the second frequency characteristic, and the third frequency characteristic. That is, the first frequency characteristic, the second frequency characteristic, and the third frequency characteristic are collected into one frequency characteristic (frequency characteristic block) to generate a frequency characteristic serving as a reference for the adjustment of the servo parameter. Therefore, the frequency characteristic block generated in the third step includes the frequency characteristics corresponding to the two different conditions, that is, the first condition and the second condition and the frequency characteristics corresponding to the condition other than the both conditions, and thus in the adjustment of the servo parameter performed in the fourth step, variations in the mechanical characteristic in the target device can be referred to as widely as possible, allowing for implementing suitable adjustment of the servo parameter that can respond to wide variations in the mechanical characteristic.

Here, in the above-described adjustment method, when a movable range of a load driven by the motor in the target device is limited to a finite range, the characteristic acquisition condition may be a condition for the position of the load in the movable range. That is, in a case where the characteristic acquisition condition is a positional condition, the characteristic acquisition condition has taken into consideration the fact that the mechanical rigidity or the like of the target device may vary depending on the position of the load. Therefore, by employing the above-described adjustment method in such a case, it is possible to eliminate instability in control caused by variations in the frequency characteristic due to the position of the load as much as possible. In the adjustment method, preferably, the first condition is a positional condition when the load is located at one end of the movable range, and the second condition is a positional condition when the load is located at the other end of the movable range.

In the above-described adjustment method, the characteristic acquisition condition may be a condition for an operation period of a device in a device group having the same specification as the target device and, in that case, the first condition and the second condition may be conditions for respective operation periods of a first device and a second device that are different from each other in the device group. That is, in a case where the characteristic acquisition condition is a positional condition, the characteristic acquisition condition has taken into consideration the fact that the mechanical rigidity or the like of the target device may vary depending on the operation period of the target device. Therefore, by employing the above-described adjustment method in such a case, it is possible to eliminate instability in control caused by variations in the frequency characteristic due to the operation period of the target device as much as possible.

Here, in the above-described adjustment method, the frequency characteristic may include a characteristic related to a gain. In that case, in the second step, a first peak related to resonance in a gain transition of the first frequency characteristic and a second peak related to resonance in a gain transition of the second frequency characteristic may be extracted, and the third frequency characteristic may be generated by linearly interpolating the first peak and the second peak with a section between a first frequency corresponding to the first peak and a second frequency corresponding to the second peak used as the predetermined section. In the third step, from the gain transition of the first frequency characteristic, the gain transition of the second frequency characteristic, and a gain transition of the third frequency characteristic, a maximum gain transition at an individual frequency may be generated as the frequency characteristic block. That is, for the a gain characteristic included in the frequency characteristic, while focusing on the resonance characteristic, the third frequency characteristic in the second step is interpolated, and the frequency characteristic block in the third step is generated. For the interpolation, the third frequency characteristic is obtained by linear interpolation on the assumption that in the predetermined section, the gain peak can linearly change from the first peak to the second peak.

As another method related to a gain characteristic included in a frequency characteristic, the frequency characteristic may include a characteristic related to a gain. In that case, in the second step, a first peak related to resonance in a gain transition of the first frequency characteristic and a second peak related to resonance in a gain transition of the second frequency characteristic may be extracted, and the third frequency characteristic may be generated by performing interpolation so that a gain is larger than a reference gain transition obtained by linearly interpolating the first peak and the second peak with a section between a first frequency corresponding to the first peak and a second frequency corresponding to the second peak used as the predetermined section. In the third step, a maximum gain transition at an individual frequency may be generated as the frequency characteristic block from the gain transition of the first frequency characteristic, the gain transition of the second frequency characteristic, and a gain transition of the third frequency characteristic. Also in that case, while focusing on the resonance characteristic, the third frequency characteristic in the second step is interpolated, and the frequency characteristic block in the third step is generated. For the interpolation, the third frequency characteristic is obtained on the assumption that in the predetermined section, the gain peak can significantly change from the first peak to the second peak as compared to a case of linear change.

In the above described adjustment method, the frequency characteristic may further include a characteristic related to a phase. In that case, in the third step, a minimum phase shift at an individual frequency may further be generated from a phase shift of the first frequency characteristic and a phase shift of the second frequency characteristic, and the minimum phase shift may be included in the frequency characteristic block. By considering the phase shift in addition to the gain transition, more suitable adjustment of the servo parameter is implemented.

As still another method related to a gain characteristic included in a frequency characteristic, the frequency characteristic may include a characteristic related to a gain. In that case, in the first step, a frequency characteristic of the motor may be acquired as an additional frequency characteristic also under an additional condition different from the first condition and the second condition. In the second step, a first peak related to resonance in a gain transition of the first frequency characteristic, a second peak related to resonance in a gain transition of the second frequency characteristic, and an additional peak related to resonance in a gain transition of the additional frequency characteristic may be extracted, the predetermined section may be determined based on the first peak, the second peak, and the additional peak, and then the third frequency characteristic may be generated by performing interpolation so as not to fall below the first peak, the second peak, and the additional peak in the predetermined section. In the third step, a maximum gain transition at an individual frequency may be generated as the frequency characteristic block from the gain transition of the first frequency characteristic, the gain transition of the second frequency characteristic, and a gain transition of the third frequency characteristic. This allows for parameter adjustment that can suitably suppress vibration due to resonance in consideration of a plurality of gain peaks in the predetermined section.

In the above-described adjustment method, the frequency characteristic may include a characteristic related to a gain. In the second step, a plurality of the predetermined sections including at least a first section and a second section may be specified, and the third frequency characteristic may be interpolated in each of the plurality of the predetermined sections. In the third step, the frequency characteristic block may be generated based on the first frequency characteristic, the second frequency characteristic, and the third frequency characteristic which corresponds to each of the plurality of the predetermined sections. That is, there may be a plurality of predetermined sections in which the third frequency characteristic is interpolated. In that case, in each of the predetermined sections, the third frequency characteristic can be interpolated using peaks related to resonance as described above, and the frequency characteristic block can be generated using the third frequency characteristic.

In the above-described adjustment method, in the second step, the first section and the second section may be specified based on a frequency difference between each of a plurality of peaks related to resonance in the gain transition of the first frequency characteristic and each of a plurality of peaks related to resonance in the gain transition of the second frequency characteristic. As an example, in the gain transition of the first frequency characteristic and the gain transition of the second frequency characteristic, the plurality of predetermined sections can be specified by collecting peaks relatively close to each other among the peaks related to resonance into one group.

Here, the present invention can be understood from an aspect of an adjustment device that adjusts a servo parameter related to servo control of a motor. The adjustment device includes: an acquisition unit configured to acquire, in a target device with the motor attached, a frequency characteristic of the motor under characteristic acquisition conditions related to the frequency characteristic of the motor and including at least a first condition and a second condition different from each other; a first adjustment unit configured to interpolate, based on a first frequency characteristic corresponding to the first condition and a second frequency characteristic corresponding to the second condition, a third frequency characteristic which is a frequency characteristic corresponding to a predetermined section sandwiched between the first condition and the second condition; a second adjustment unit configured to generate, based on the first frequency characteristic, the second frequency characteristic, and the third frequency characteristic, a frequency characteristic block serving as a reference for adjusting the servo parameter; and a third adjustment unit configured to adjust, based on the frequency characteristic block, the servo parameter. The adjustment device configured as described above can implement the above-described adjustment method for a servo parameter. In the above-described adjustment device, the technical idea disclosed for the above-described adjustment method for a servo parameter can be applied to the adjustment device within a range in which no technical inconsistency occurs.

### ADVANTAGEOUS EFFECTS OF INVENTION

Suitable adjustment of the servo parameter can be implemented in consideration of variations in a frequency characteristic in a target device as much as possible.

### BRIEF DESCRIPTION OF THE DRAWINGS

FIG. 1 is a diagram illustrating schematic configurations of a control system for a target device to which an adjustment method for a servo parameter of the present disclosure is applied and an adjustment device that executes the adjustment method.
FIG. 2 is a diagram illustrating a control structure of a servo driver included in the control system illustrated in FIG. 1.
FIG. 3 is a first diagram illustrating a positional relationship of a load on a control axis of the target device.
FIG. 4 is a diagram illustrating a frequency characteristic of a motor when the load is located at three positions illustrated in FIG. 3.
FIG. 5 is a flowchart illustrating a flow of processing according to an adjustment method for a servo parameter of the present invention.
FIG. 6 is a first diagram illustrating a mode of interpolation of a third frequency characteristic in the flowchart illustrated in FIG. 5.
FIG. 7 is a second diagram illustrating a mode of interpolation of the third frequency characteristic in the flowchart illustrated in FIG. 5.
FIG. 8 is a diagram illustrating a mode of generation of a frequency characteristic block in the flowchart illustrated in FIG. 5.
FIG. 9A is a third diagram illustrating a mode of interpolation of the third frequency characteristic in the flowchart illustrated in FIG. 5.
FIG. 9B is a fourth diagram illustrating a mode of interpolation of the third frequency characteristic in the flowchart illustrated in FIG. 5.
FIG. 10 is a diagram illustrating another mode of a gain transition of a frequency characteristic of the motor.
FIG. 11 is a second diagram illustrating a positional relationship of the load on the control axis of the target device.
FIG. 12 is a third diagram illustrating a positional relationship of the load on the control axis of the target device.

### DESCRIPTION OF EMBODIMENTS

### <First Example>

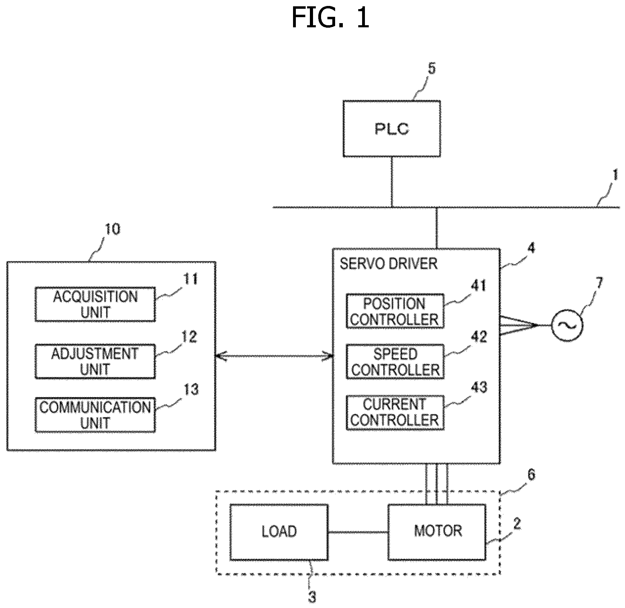

FIG. 1 is a diagram illustrating schematic configurations of a control system to which an adjustment method for a servo parameter of the present disclosure is applied and an adjustment device 10 in which the adjustment method is executed. First, the control system will be described. The control system includes a network 1, a motor 2, a load 3, a servo driver 4, and a programmable logic controller (PLC) 5. The control system is a system for driving and controlling the load 3 together with the motor 2. The motor 2 and the load 3 are each referred to as a target device 6 to be controlled by the control system. Here, a part of the target device 6 (e.g., an arm of an industrial robot or a table of a transfer device) can be exemplified as the load 3, and the motor 2 is incorporated in the target device 6 as an actuator that drives the load 3. For example, the motor 2 is an AC servo motor. An encoder (not illustrated) is attached to the motor 2, and a parameter signal related to the operation of the motor 2 is fed back to the servo driver 4 by the encoder. The parameter signal fed back as above (hereinafter, referred to as a feedback signal) includes, for example, position information related to a rotational position (angle) of a rotary shaft of the motor 2, information of a rotational speed of the rotary shaft.

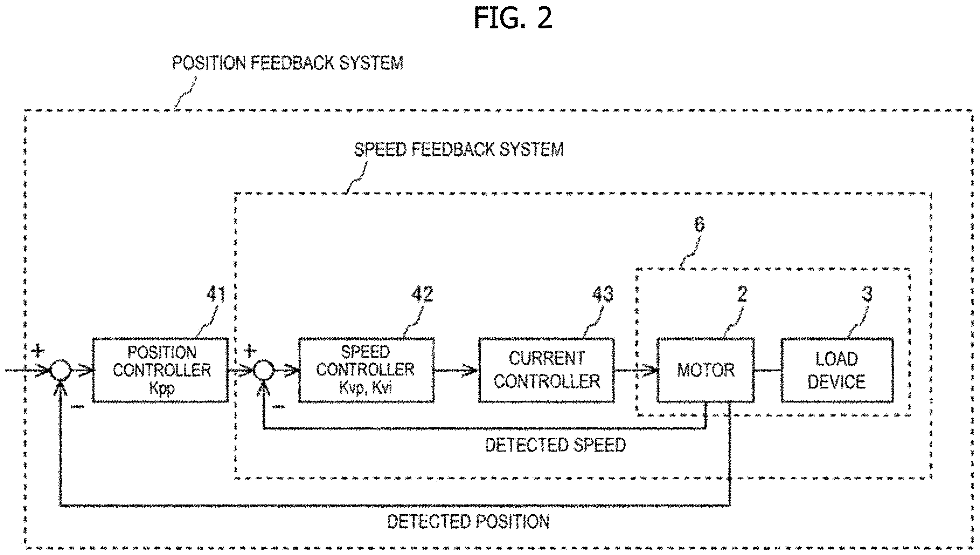

The servo driver 4 receives an operation command signal related to the operation (motion) of the motor 2 from the PLC 5 via the network 1, and receives a feedback signal output from the encoder connected to the motor 2. The servo driver 4 performs servo control related to the driving of the motor 2, that is, calculates a command value related to the operation of the motor 2, based on the operation command signal from the PLC 5 and the feedback signal from the encoder, and supplies a drive current to the motor 2 so that the operation of the motor 2 follows the command value. The supplied current uses alternating current power supplied from an alternating current power source 7 to the servo driver 4. In the present example, the servo driver 4 is of a type that receives three-phase alternating current, but may be of a type that receives single-phase alternating current. The servo control by the servo driver 4 is feedback control using a position controller 41, a speed controller 42, and a current controller 43 included in the servo driver 4, and details thereof will be described below with reference to FIG. 2.

The target device 6 configured as described above and the control system (the servo driver 4 and the like) that performs servo control of the target device 6 are provided at a predetermined location in a factory or the like. Therefore, in order for the target device 6 to actually operate, servo parameters for the servo control of the motor 2 incorporated in the target device 6 need to appropriately reflect the actual structure, control characteristic, and the like of the load 3. Therefore, in order to efficiently adjust the servo parameters for the servo control executed by the control system, the adjustment device 10 disclosed in the present application is electrically connected to the servo driver 4. When the adjustment of the servo parameters by the adjustment device 10 is completed, the adjustment device 10 is removed from the servo driver 4.

Here, a configuration of the adjustment device 10 will be described with reference to FIG. 1. FIG. 1 is a functional block diagram illustrating various functions implemented by software or the like executed in the adjustment device 10 in an image form. The adjustment device 10 is a device for adjusting a device control parameter of the servo driver 4 and is installed with software (program) for adjustment. Specifically, the adjustment device 10 is a computer including an arithmetic unit, a memory, and the like and is installed with adjustment software executable therein. Then, the adjustment device 10 adjusts servo parameters related to the servo control of the motor 2 of the target device 6 using the adjustment software. The adjustment device 10 and the target device 6 or the servo driver 4 are connected to each other in a wired or wireless manner so as to be communicable with each other.

The adjustment device 10 includes an acquisition unit 11, an adjustment unit 12, and a communication unit 13. The acquisition unit 11 is a functional unit that analyzes a frequency response of the motor 2, which is a servo parameter adjustment target, and acquires a frequency characteristic of the motor 2. The acquisition unit 11 acquires the frequency response of the motor 2 and further performs predetermined fast Fourier transform processing on the frequency response to acquire the frequency characteristic. The adjustment unit 12 is a functional unit that adjusts servo parameters for the servo control of the motor 2 based on the frequency characteristic acquired by the acquisition unit 11. The adjustment of the servo parameters by the adjustment unit 12 will be described in detail below. The communication unit 13 is a functional unit that controls transmission and reception of data between the adjustment device 10 and the control system.

Here, a control structure of the servo driver 4 for servo control of the motor 2 will be described with reference to FIG. 2. The servo driver 4 includes the position controller 41, the speed controller 42, and the current controller 43, and the servo control is executed by processing of these controllers. The position controller 41 performs, for example, proportional control (P control). Specifically, a speed command is calculated by multiplying a position deviation, which is a deviation between a position command notified from the PLC 5 and a detected position, by a position proportional gain Kpp. The position proportional gain Kpp of the position controller 41 is one of the servo parameters to be adjusted.

Next, the speed controller 42 performs, for example, proportional integration control (PI control). Specifically, a torque command is calculated by multiplying an integral amount of a speed deviation, which is a deviation between the speed command calculated by the position controller 41 and a detected speed, by a velocity integral gain Kvi, and multiplying the sum of the calculation result and the speed deviation by a velocity proportional gain Kvp. Each of the velocity proportional gain Kvp and the velocity integral gain Kvi of the speed controller 42 is also one of the servo parameters to be adjusted. The speed controller 42 may perform P control instead of PI control. In that case, the velocity proportional gain Kvp of the speed controller 42 is one of the servo parameters to be adjusted. Next, the current controller 43 outputs a current command based on the torque command calculated by the speed controller 42, whereby the motor 2 is driven and controlled. The current controller 43 includes a filter (a first order low-pass filter) related to a torque command and one or more notch filters, and has cutoff frequencies related to the performance of these filters as the servo parameters to be adjusted.

The control structure of the servo driver 4 includes a speed feedback system including the speed controller 42, the current controller 43, and the target device 6 as feedforward elements, and further includes a position feedback system including the speed feedback system and the position controller 41 as feedforward elements. With the control structure configured as above, the servo driver 4 can servo-control the motor 2 so as to follow the position command supplied from the PLC 5.

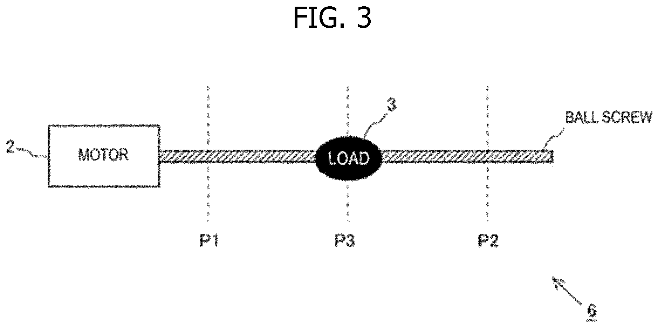

Here, as illustrated in FIG. 3, the target device 6 is configured such that an output shaft of the motor 2 is connected to a ball screw, and the ball screw is rotationally driven to control the position of the load 3. At this time, the movable range of the load 3 by the driving of the motor 2 is a finite range from a position P1 to a position P2 as illustrated in FIG. 3. Here, the position P1 is a position closest to the motor 2 in the movable range and is a boundary position indicating one limit of the movable range. The position P2 is a position farthest from the motor 2 in the movable range and is a boundary position indicating the other limit of the movable range.

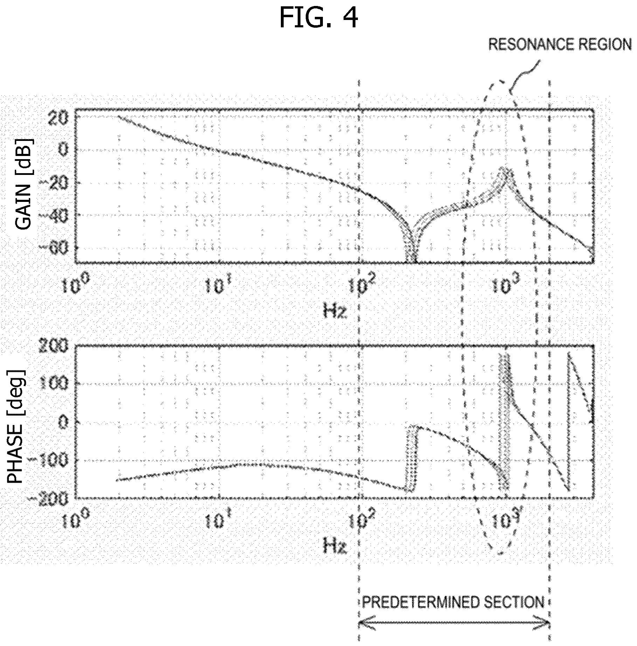

Here, the mechanical rigidity of the target device 6 including the ball screw and the load 3 may differ between when the load 3 is located at the P1 and when the load 3 is located at the P2. As a result, as illustrated in FIG. 4, the frequency characteristic of the motor 2 vary depending on the position of the load 3. FIG. 4 illustrates the respective frequency characteristics of the motor 2 when the load 3 is located at the position P1, the position P2, and a position P3 which is intermediate between the positions P1 and P2. The upper part of FIG. 4 illustrates a gain characteristic, and the lower part illustrates a phase shift. As can be understood from FIG. 4, in a low frequency region and a high frequency region, the difference in frequency characteristic due to the position of the load 3 is extremely small, but in a resonance region (a region between the low frequency region and the high frequency region) including a resonance point of the target device 6, the frequency characteristic varies depending on the position of the load 3. Therefore, when the servo parameters are adjusted based on a frequency characteristic obtained with the load 3 placed under a specific positional condition, the adjustment result is not necessarily suitable for a case where the load 3 is placed under another positional condition. In particular, in the resonance region, the vibration of the load 3 or the like is likely to become significant due to the resonance, and thus it is necessary to accurately adjust the servo parameters.

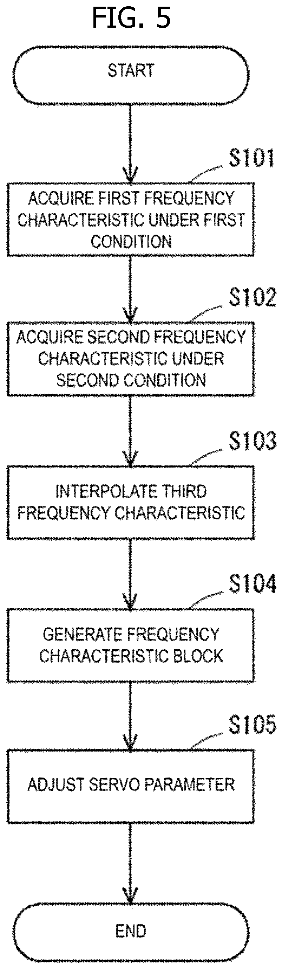

Then, an adjustment method for a servo parameter that is less likely to be affected by the position of the load 3 in the target device 6 will be described with reference to FIG. 5. The adjustment method for a servo parameter illustrated in FIG. 5 is basically performed before the target device 6 is formally operated under the servo control of the servo driver 4, but can also be applied to a case where the servo parameters need to be adjusted again in consideration of various circumstances such as a problem that has occurred in the target device 6 after the target device 6 is formally operated.

The adjustment method illustrated in FIG. 5 is implemented by cooperation between the acquisition unit 11, the adjustment unit 12, and the communication unit 13 included in the adjustment device 10. First, in S101, a first frequency characteristic, which is a frequency characteristic of the motor 2, is acquired under a first condition related to the position of the load 3. Specifically, the first condition is a condition that the load 3 is located at P1. The frequency characteristic in the present embodiment includes a gain transition and a phase shift. As described above, the position P1 is a boundary position when the load 3 is located on the side closest to the motor 2 in the movable range of the load 3. Next, in S102, a second frequency characteristic, which is a frequency characteristic of the motor 2, is acquired under a second condition related to the position of the load 3. Specifically, the second condition is a condition that the load 3 is located at P2. As described above, the position P2 is a boundary position when the load 3 is located on the side farthest from the motor 2 in the movable range of the load 3.

The reason why the frequency characteristics (the first frequency characteristic and the second frequency characteristic) corresponding to the positions P1 and P2, which are the boundary positions in the movable range of the load 3, are acquired in S101 and S102 in this way is to interpolate a frequency characteristic of the motor 2 when the load 3 is located at any position between the positions P1 and P2. That is, this is because, a frequency characteristic in a case where the load 3 is located at any position between the positions P1 and P2 may be different from the first frequency characteristic and the second frequency characteristic particularly in the resonance region, but is highly likely to have a certain degree of correlation with the first frequency characteristic and the second frequency characteristic because changes in the frequency characteristic due to the mechanical structure of the target device 6 continuously occurs.

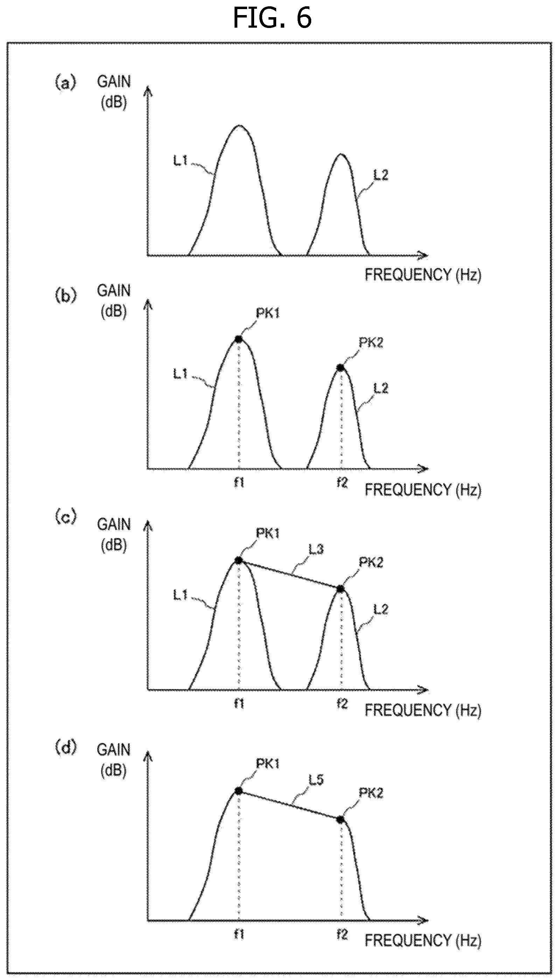

Then, in S103, in a predetermined section (see FIG. 4) related to the resonance region in the frequency characteristic of the motor, interpolation of a third frequency characteristic corresponding to the predetermined section is performed. The predetermined section is only required to have a certain degree of relevance with the resonance region and may coincide with the resonance region, or may include a part or all of the resonance region. The interpolation of the third frequency characteristic is performed based on the first frequency characteristic and the second frequency characteristic, and a specific processing mode thereof will be described with reference to FIG. 6. FIG. 6 illustrates a gain transition in the frequency characteristic in the vicinity of the predetermined section. In FIG. 6, the gain transition of the first frequency characteristic is referred to by a line L1, and the gain transition of the second frequency characteristic is referred to by a line L2.

As for the interpolation of the third frequency characteristic, the gain transition will be described first. Here, FIG. 6(a) illustrates the gain transition L1 of the first frequency characteristic and the gain transition L2 of the second frequency characteristic acquired in S101 and S102, respectively. For the interpolation of the third frequency characteristic in S103, first, a first peak PK1, which is a peak of the gain in the gain transition L1 of the first frequency characteristic, and a second peak PK2, which is a peak of the gain in the gain transition L2 of the second frequency characteristic, are extracted (see FIG. 6(b)). The first frequency corresponding to the first peak PK1 (i.e., the resonance frequency in the first frequency characteristic) is referred to by f1, and the second frequency corresponding to the second peak PK2 (i.e., the resonance frequency in the second frequency characteristic) is referred to by f2. A section between the first frequency f1 and the second frequency f2 is referred to as the predetermined section. Next, as for the gain transition of the frequency characteristic, a gain transition L3 obtained by linearly interpolating the first peak PK1 and the second peak PK2 as illustrated in FIG. 6(c) is interpolated as the third frequency characteristic corresponding to the predetermined section.

Now, back to FIG. 5. When the interpolation process of the third frequency characteristic in S103 is completed, a frequency characteristic block is generated in S104. The frequency characteristic block is a frequency characteristic serving as a reference for adjusting the servo parameters, and a specific generation process thereof will be described with reference to FIG. 6(d). Specifically, based on the gain transition L1 of the first frequency characteristic, the gain transition L2 of the second frequency characteristic, and the gain transition L3 of the third frequency characteristic, a maximum gain transition extracted as a maximum value of the gain at each frequency is referred to as a frequency characteristic block L5. Therefore, in the frequency characteristic block L5, the gain transition in the predetermined section has a shape in which L3 is a contour and a portion between the first peak PK1 and the second peak PK2 is filled, and as can be seen from comparison with FIG. 6(a), a region of the gain transition to be considered in the adjustment of the servo parameters is widened. This means that the reference frequency characteristic is formed to be enlarged so that a condition other than the first condition and the second condition described above is taken into account in the adjustment of the servo parameters.

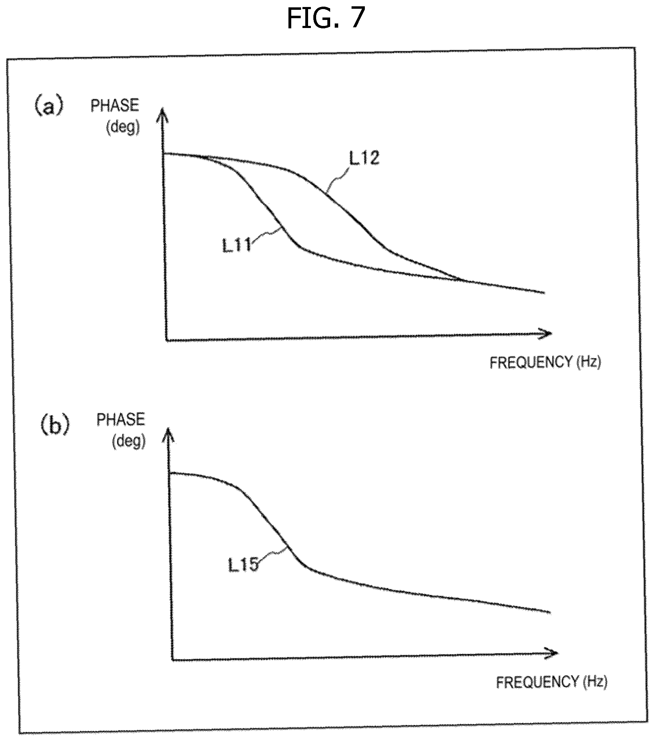

Next, a phase shift to be included in the frequency characteristic block for the adjustment of the servo parameters will be described with reference to FIG. 7. FIG. 7 illustrates a phase shift in the frequency characteristic in the vicinity of the predetermined section. In FIG. 7, the phase shift of the first frequency characteristic is referred to by a line L11, and the phase shift of the second frequency characteristic is referred to by a line L12. Here, FIG. 7(a) illustrates the phase shift L11 of the first frequency characteristic and the phase shift L12 of the second frequency characteristic acquired in S101 and S102, respectively. Based on the phase shift L11 of the first frequency characteristic and the phase shift L12 of the second frequency characteristic, a minimum phase shift L15 extracted as a minimum value of the phase at each frequency is included in the frequency characteristic block L5. In the present embodiment, the minimum phase shift L15 coincides with the phase shift L11 of the first frequency characteristic.

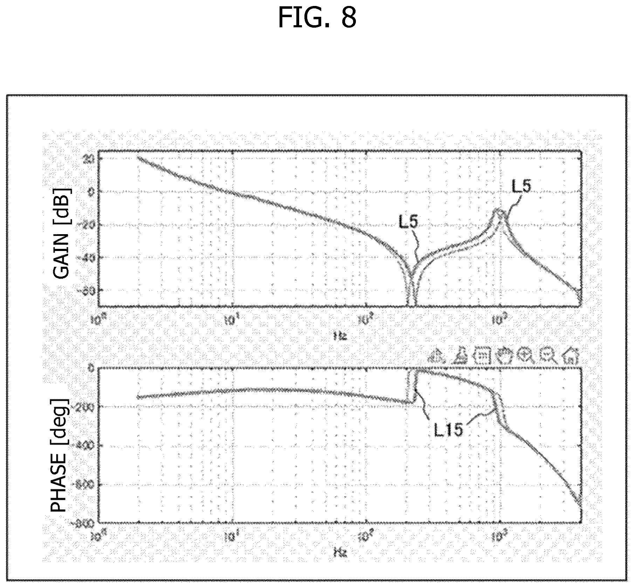

Now, back to FIG. 5. When the generation process of the frequency characteristic block in S104 is completed, in S105, the adjustment of the servo parameters of the motor 2 is performed based on the frequency characteristic block. Here, the gain transition and the phase shift included in the frequency characteristic block are illustrated in FIG. 8. The gain transition is referred to by L5 in the upper part of FIG, 8, and the phase shift is referred to by L15 in the lower part. The gain transition and the phase shift illustrated in FIG. 6(d) and FIG. 7(b) are respectively obtained by extracting and enlarging a part of the same transition and shift illustrated in FIG. 8. In S105, the adjustment of the servo parameters is performed in consideration of a gain margin and a phase margin in the frequency characteristic block illustrated in FIG. 8. For the adjustment of the servo parameters, a known technique can be suitably adopted. When the adjustment of the servo parameters is completed, the adjusted parameters are transmitted to the target device 6 side via the communication unit 13 of the adjustment device 10. The received adjusted servo parameters are set in the servo driver 4 and used for the servo control of the motor 2.

According to such an adjustment method for a servo parameter illustrated in FIG. 5, the adjustment of the servo parameters is performed in consideration of a condition (a condition for the position of the load 3) other than the first condition and the second condition under which the frequency characteristics are actually measured. The frequency characteristic corresponding to the condition other than the first condition and the second condition is not actually measured, and the interpolation process of the third frequency characteristic is used instead, as described above. Therefore, the adjustment of the servo parameters can be more suitably and more efficiently implemented.

### <First Modification Example>

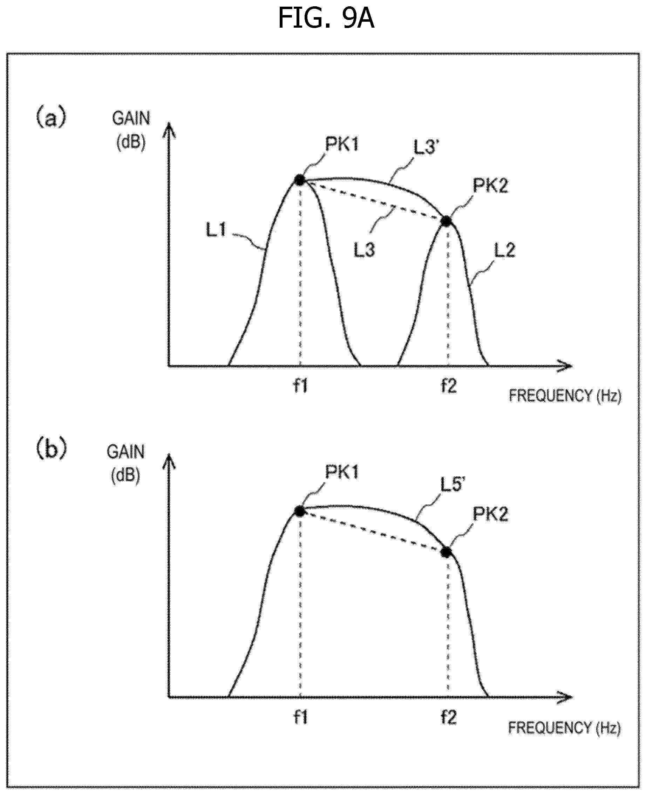

Here, a modification example of the adjustment method for a servo parameter illustrated in FIG. 5 will be described with reference to FIG. 9A. FIG. 9A(a) illustrates another mode of the interpolation of the third frequency characteristic related to the processing in S103. In the present modification example, as for a gain transition of a frequency characteristic, when the gain transition L3 obtained by linearly interpolating the first peak PK1 and the second peak PK2 illustrated in FIG. 6(c) is set as a reference gain transition, a gain transition L3', which is obtained by performing interpolation so that the gain is larger than the reference gain transition, is interpolated as the third frequency characteristic corresponding to the predetermined section. The gain transition L3' may transit so as to be convex upward in the predetermined section (a section between the first frequency f1 and the second frequency f2).

FIG. 9A(b) illustrates another mode of the generation of the frequency characteristic block related to the processing in S104. Specifically, based on the gain transition L1 of the first frequency characteristic, the gain transition L2 of the second frequency characteristic, and the gain transition L3' of the third frequency characteristic, a maximum gain transition extracted as a maximum value of the gain at each frequency is referred to as a frequency characteristic block L5'. Therefore, in the frequency characteristic block L5', the gain transition in the predetermined section has a shape in which the L3' is a contour and a portion between the first peak PK1 and the second peak PK2 is filled, and as can be seen from comparison with FIG. 6(a) and FIG. 6(c), a region of the gain transition to be considered in the adjustment of the servo parameters is further widened. This means that the reference frequency characteristic is formed so that a condition other than the first condition and the second condition described above is considered in the adjustment of the servo parameters.

As described above, the adjustment of the servo parameters is performed in consideration of the condition (the condition for the position of the load 3) other than the first condition and the second condition under which the frequency characteristics are actually measured, and thus, the adjustment of the servo parameters can be more suitably and more efficiently implemented.

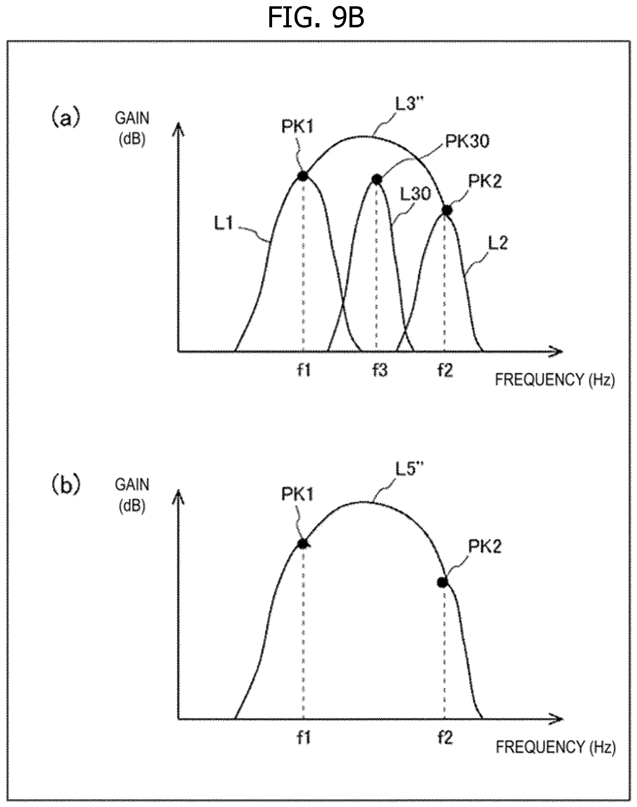

Next, a further modification example of the adjustment method for a servo parameter illustrated in FIG. 5 will be described with reference to FIG. 9B. FIG. 9B(a) illustrates another mode of the interpolation of the third frequency characteristic related to the processing in S103. In the present modification example, the frequency characteristic of the motor 2 is acquired under an additional condition different from the first condition and the second condition (hereinafter referred to as an "additional frequency characteristic"). The gain transition of the additional frequency characteristic is referred to by L30 in FIG. 9B(a). A peak of the gain (additional peak) in the gain transition of the additional frequency characteristic is referred to by PK30, and the resonance frequency thereof is f3. The resonance frequency f3 is located between the first frequency f1 and the second frequency f2. In the modification example illustrated in FIG. 9B, a gain transition L3", which is obtained by interpolation so as not to fall below the first peak PK1, the second peak PK2, and the additional peak PK30, is interpolated as the third frequency characteristic corresponding to the predetermined section. Here, the degree of not falling below each peak may be set as appropriate, but for example, can be set such that a value of the gain on L3" at the resonance frequency f3 becomes a value increased by a certain ratio with reference to the additional peak PK30 (e.g., 110% of the additional peak PK30).

FIG. 9B(b) illustrates another mode of the generation of the frequency characteristic block related to the processing in S104. Specifically, based on the gain transition L1 of the first frequency characteristic, the gain transition L2 of the second frequency characteristic, the gain transition L30 of the additional frequency characteristic, and the gain transition L3" of the third frequency characteristic, a maximum gain transition extracted as a maximum value of the gain at each frequency is referred to as a frequency characteristic block L5". Therefore, in the frequency characteristic block L5", the gain transition in the predetermined section has a shape in which the L3" is a contour and a portion between the first peak PK1 and the second peak PK2 is filled, and as can be seen from comparison with FIG. 6(a), FIG. 6(c), and FIG. 9A(b), a region of the gain transition to be considered in the adjustment of the servo parameters is further widened.

As described above, the adjustment of the servo parameters is performed in consideration of the condition (the condition for the position of the load 3) other than the first condition, the second condition, and the additional condition under which the frequency characteristics are actually measured, and thus, the adjustment of the servo parameters can be more suitably and more efficiently implemented.

### <Second Modification Example>

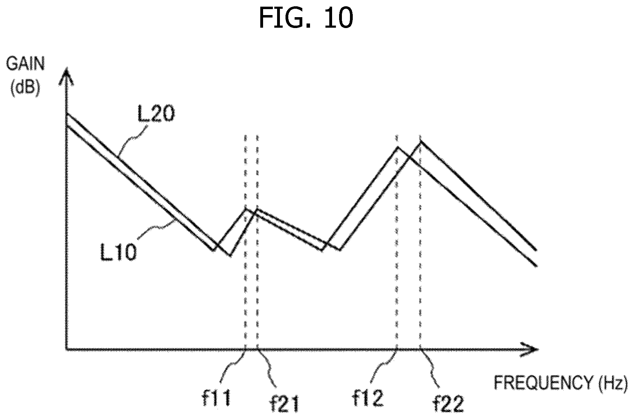

Here, a modification example of the adjustment method for a servo parameter illustrated in FIG. 5, which is related to determination of a predetermined section for the interpolation of the third frequency characteristic, will be described with reference to FIG. 10. In FIG. 10, the gain transition of the first frequency characteristic is referred to by a line L10, and the gain transition of the second frequency characteristic is referred to by a line L20. In the target device 6 in the present modification example, the gain transition L10 includes two gain peaks, and the gain transition L20 also includes two gain peaks. The resonance frequencies (frequencies corresponding to the two gain peaks) in the gain transition L10 of the first frequency characteristic are f11 and f12 (f11 < f12), and the resonance frequencies (frequencies corresponding to the two gain peaks) in the gain transition L20 of the second frequency characteristic are f21 and f22 (f21 < f22).

Here, when the resonance frequencies f11 and f12 in the gain transition of the first frequency characteristic and the resonance frequencies f21 and f22 in the gain transition of the second frequency characteristic are respectively compared with each other, the frequency difference between f11 and f21 and the frequency difference between f12 and f22 are relatively small as compared with the frequency difference between the other resonance frequencies (for example, the difference between the resonance frequencies f11 and f22). Therefore, it can be considered that the resonance frequencies f11 and f21 relate to the same resonance point of the target device 6, and the frequency difference therebetween is caused by a difference in characteristic acquisition condition (a difference between the first condition and the second condition) when the first frequency characteristic and the second frequency characteristic are acquired. Similarly, it can be considered that the resonance frequencies f12 and f22 relate to another resonance point of the target device 6, and the frequency difference therebetween is caused by a difference in characteristic acquisition condition (a difference between the first condition and the second condition) when the first frequency characteristic and the second frequency characteristic are acquired.

In such a case, a section defined by the resonance frequencies f11 and f21 is specified as a first section which is the above-described predetermined section, and a section defined by the resonance frequencies f12 and f22 is specified as a second section which is the above described predetermined section. Then, for each of the two predetermined sections, the interpolation of the third frequency characteristic illustrated in FIG. 5 (the processing in S103) is performed, and the generation of a frequency characteristic block (the processing in S104) is performed. By performing the adjustment of the servo parameters using the frequency characteristic blocks obtained in this way (the processing in S104), instability in the servo control in the target device 6 can be eliminated as much as possible.

Although the first frequency characteristic corresponding to the first condition and the second frequency characteristic corresponding to the second condition are used in the mode illustrated in FIG. 10, a frequency characteristic corresponding to an additional condition different from these conditions may be further acquired, and a plurality of predetermined sections may be specified by using the gain transition of the further acquired frequency characteristic. By acquiring more frequency characteristics for the determination of the predetermined sections, the predetermined sections can be specified more accurately, and thus, more suitable adjustment of the servo parameter can be implemented.

### <Third Modification Example>

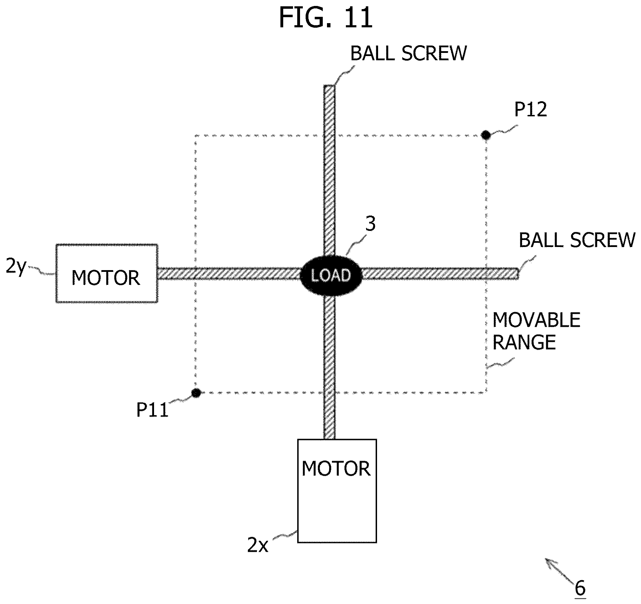

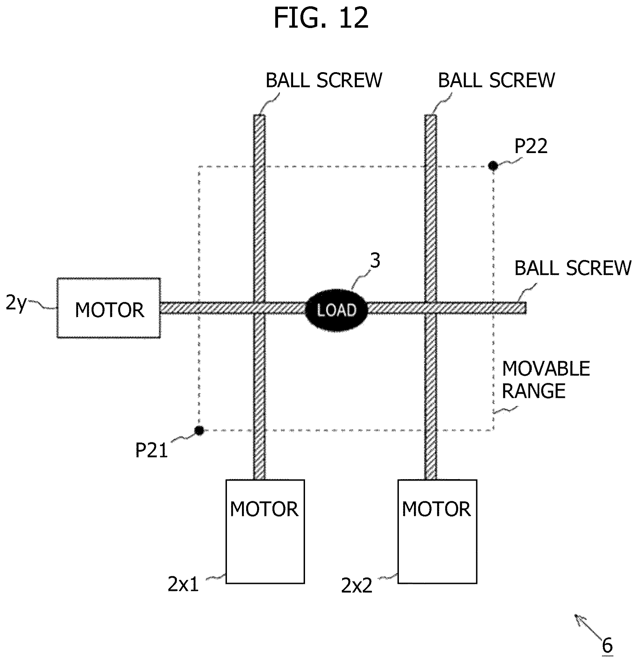

A modification example of the target device 6 to which the adjustment method for a servo parameter illustrated in FIG. 5 is applied will be described with reference to FIGS. 11 and 12. In the target device 6 illustrated in FIG. 11, two control axes (X and Y axes) are provided, and both axes are orthogonal to each other. The output shaft of a motor 2x on the X axis is connected to an X-axis ball screw, and the output shaft of a motor 2y on the Y axis is connected to a Y-axis ball screw. The load 3 is directly driven on the Y axis by the motor 2y, and the load 3 and a structure on the Y axis (such as a table on which the load 3 is placed) are driven on the X axis by the motor 2x. Therefore, the movable range of the load 3 in this case is a finite rectangular range on the XY plane as illustrated in FIG. 11.

Here, a position P11 is a position at which the load 3 is closest to the motor 2x and the motor 2y in the movable range and is a boundary position indicating a limit of the movable range. A position P12 is a position farthest from the motor 2x and the motor 2y in the movable range and is a boundary position indicating a limit of the movable range. Then, in a case where the above-described adjustment method for a servo parameter is applied to the motor 2x on the X axis of the target device 6 of the present modification example, the frequency characteristic of the motor 2x when the load 3 is located at the position P11 is regarded as the first frequency characteristic in S101, and the frequency characteristic of the motor 2x when the load 3 is located at the position P12 is regarded as the second frequency characteristic in S102. Accordingly, the servo parameters of the motor 2x can be adjusted in consideration of a frequency characteristic when the load 3 is located at any position in the movable range.

Next, in the target device 6 illustrated in FIG. 12, control axes (X and Y axes) orthogonal to each other are provided, and the X axis includes two control axes X1 and X2 parallel to each other. That is, the target device 6 has a gantry structure. Specifically, the output shaft of a motor 2x1 on the X1 axis is connected to an X1-axis ball screw, the output shaft of a motor 2x2 on the X2 axis is connected to an X2-axis ball screw, and the output shaft of a motor 2y on the Y axis is connected to a Y-axis ball screw. The load 3 is directly driven on the Y axis by the motor 2y, and the load 3 and a structure on the Y axis (such as a table on which the load 3 is placed) are driven on the X axis by the motor 2x1 and the motor 2x2. Therefore, the movable range of the load 3 in this case is a finite rectangular range on the XY plane as illustrated in FIG. 12.

Here, a position P21 is a position at which the load 3 is closest to the motors 2x1 and 2x2 and the motor 2y in the movable range and is a boundary position indicating a limit of the movable range. A position P22 is a position farthest from the motors 2x1 and 2x2 and the motor 2y in the movable range and is a boundary position indicating a limit of the movable range. Then, in a case where the above-described adjustment method for a servo parameter is applied to the motor 2x1 on the X1 axis and the motor 2x2 on the X2 axis of the target device 6 of the present modification example, the frequency characteristics of the motor 2x1 and the motor 2x2 when the load 3 is located at the position P21 are regarded as the first frequency characteristic in S101, and the frequency characteristics of the motor 2x1 and the motor 2x2 when the load 3 is located at the position P22 are regarded as the second frequency characteristic in S102. Accordingly, the servo parameters of the motor 2x1 and the motor 2x2 can be adjusted in consideration of frequency characteristics when the load 3 is located at any position in the movable range.

### <Fourth Modification Example>

In the embodiments described above, the first condition and the second condition corresponding to the characteristic acquisition condition are conditions for the position of the load 3, which has a relevance to the frequency characteristic of the motor 2, and the adjustment of the servo parameters is performed in consideration of differences in the frequency characteristic due to differences in the position of the load 3. The technical idea related to the adjustment of the servo parameters disclosed in the present application can be applied to a condition other than the above-described positional conditions as long as the characteristic acquisition condition is a condition that has a relevance to the frequency characteristic of the motor 2. For example, the characteristic acquisition condition may be a condition for an operation period of a device in a device group having the same specification as the target device 6. That is, the technique for adjusting servo parameters disclosed in the present application can be applied with consideration for the possibility that the longer the period of use of the target device 6 is, the more the structure inside the device may change with time of the use of the device and the more the frequency characteristic of the motor 2 is affected.

In this case, the respective operation periods of a first device and a second device that are different from each other are the first condition and the second condition. The first device and the second device are devices having the same specification as the target device 6, and the first device, the second device, and the target device 6 belong to a device group having the same specification. For example, assuming that the guaranteed operation period of the target device 6 is 10 years, the frequency characteristic of the motor 2 in the first device immediately after the start of operation (that is, the operation period is 0 year) is regarded as the first frequency characteristic, and the frequency characteristic of the motor 2 in the second device having the operation period of 10 years is regarded as the second frequency characteristic. Further, applying the above-described technical idea related to the adjustment of the servo parameters allows for adjustment of the servo parameters for eliminating the instability in control as much as possible for the 10 years of the guaranteed operation period.

### <Supplementary Note 1>

An adjustment method for a servo parameter related to servo control of a motor (2), the adjustment method including:
a first step (S101, S102) of acquiring, in a target device (6) with the motor (2) attached, a frequency characteristic of the motor (2) under characteristic acquisition conditions related to the frequency characteristic of the motor (2) and including at least a first condition and a second condition different from each other;
a second step (S103) of interpolating, based on a first frequency characteristic (L1) corresponding to the first condition and a second frequency characteristic (L2) corresponding to the second condition, a third frequency characteristic (L3) which is a frequency characteristic corresponding to a predetermined section related to a resonance region in the frequency characteristic of the motor (2);
a third step (S104) of generating, based on the first frequency characteristic (L1), the second frequency characteristic (L2), and the third frequency characteristic (L3), a frequency characteristic block (L5, L15) serving as a reference for adjusting the servo parameter; and
a fourth step (S105) of adjusting, based on the frequency characteristic block (L5, L15), the servo parameter.

### <Supplementary Note 2>

The adjustment method for a parameter according to Supplementary Note 1, wherein when a movable range of a load (3) driven by the motor in the target device (6) is limited to a finite range, the characteristic acquisition conditions are conditions for a position of the load (3) in the movable range.

### <Supplementary Note 3>

The adjustment method for a parameter according to Supplementary Note 2, wherein the first condition is a positional condition when the load (3) is located at one end portion in the movable range, and the second condition is a positional condition when the load (3) is located at the other end portion in the movable range.

### <Supplementary Note 4>

The adjustment method for a parameter according to Supplementary Note 1, wherein
the characteristic acquisition conditions are conditions for an operation period of a device in a device group having the same specification as the target device (6) and,
the first condition and the second condition are conditions for respective operation periods of a first device and a second device that are different from each other in the device group.

### <Supplementary Note 5>

The adjustment method for a parameter according to any one of Supplementary Notes 1 to 4, wherein
the frequency characteristic includes a characteristic related to a gain, and
in the second step (S103),
a first peak (PK1) related to resonance in a gain transition of the first frequency characteristic (L1) and a second peak (PK2) related to resonance in a gain transition of the second frequency characteristic (L2) are extracted, and
the third frequency characteristic (L3) is generated by linearly interpolating the first peak (PK1) and the second peak (PK2) with a section between a first frequency (f1) corresponding to the first peak (PK1) and a second frequency (f2) corresponding to the second peak (PK2) used as the predetermined section, and
in the third step (S104),
a maximum gain transition at an individual frequency is generated as the frequency characteristic block (L5) from the gain transition of the first frequency characteristic (L1), the gain transition of the second frequency characteristic (L2), and a gain transition of the third frequency characteristic (L3).

### <Supplementary Note 6>

The adjustment method for a parameter according to Supplementary Note 5, wherein
the frequency characteristic further includes a characteristic related to a phase, and
in the third step (S104), a minimum phase shift at the individual frequency is generated from a phase shift of the first frequency characteristic (L1) and a phase shift of the second frequency characteristic (L2), and the minimum phase shift is included in the frequency characteristic block (L15).

### <Supplementary Note 7>

The adjustment method for a parameter according to any one of Supplementary Notes 1 to 4, wherein
the frequency characteristic includes a characteristic related to a gain, and
in the second step (S103),
a first peak (PK1) related to resonance in a gain transition of the first frequency characteristic (L1) and a second peak (PK2) related to resonance in a gain transition of the second frequency characteristic (L2) are extracted, and
the third frequency characteristic (L3') is generated by performing interpolation so that a gain is larger than a reference gain transition obtained by linearly interpolating the first peak (PK1) and the second peak (PK2) with a section between a first frequency (f1) corresponding to the first peak (PK1) and a second frequency (f2) corresponding to the second peak (PK2) used as the predetermined section, and
in the third step (S104),
a maximum gain transition at an individual frequency is generated as the frequency characteristic block (L5') from the gain transition of the first frequency characteristic (L1), the gain transition of the second frequency characteristic (L2), and a gain transition of the third frequency characteristic (L3).

### <Supplementary Note 8>

The adjustment method for a parameter according to Supplementary Note 7, wherein
the frequency characteristic further includes a characteristic related to a phase, and
in the third step (S104), a minimum phase shift at the individual frequency is generated from a phase shift of the first frequency characteristic (L1) and a phase shift of the second frequency characteristic (L2), and the minimum phase shift is included in the frequency characteristic block (L15).

### <Supplementary Note 9>

The adjustment method for a parameter according to any one of Supplementary Notes 1 to 4, wherein
the frequency characteristic includes a characteristic related to a gain,
in the first step (S101, S102), a frequency characteristic of the motor is acquired as an additional frequency characteristic also under an additional condition different from the first condition and the second condition,
in the second step (S103),
a first peak (PK1) related to resonance in a gain transition of the first frequency characteristic (L1), a second peak (PK2) related to resonance in a gain transition of the second frequency characteristic (L2), and an additional peak (PK30) related to resonance in a gain transition of the additional frequency characteristic (L30) are extracted,
the predetermined section is determined based on the first peak (PK1), the second peak (PK2), and the additional peak (PK30), and the third frequency characteristic (L3") is generated by performing interpolation so as not to fall below the first peak (PK1), the second peak (PK2), and the additional peak (PK30) in the predetermined section, and
in the third step (S104),
a maximum gain transition at an individual frequency is generated as the frequency characteristic block (L5") from the gain transition of the first frequency characteristic (L1), the gain transition of the second frequency characteristic (L2), and a gain transition of the third frequency characteristic (L3").

### <Supplementary Note 10>

The adjustment method for a parameter according to any one of Supplementary Notes 1 to 4, wherein
the frequency characteristic includes a characteristic related to a gain,
in the second step (S103), a plurality of the predetermined sections including at least a first section and a second section is specified, and the third frequency characteristic is interpolated in an individual of the plurality of the predetermined sections, and
in the third step (S104), the frequency characteristic block is generated based on the first frequency characteristic, the second frequency characteristic, and the third frequency characteristic which corresponds to each of the plurality of the predetermined sections.

### <Supplementary Note 11>

The adjustment method for a parameter according to Supplementary Note 10, wherein, in the second step (S103), the first section and the second section are specified based on a frequency difference between each of a plurality of peaks related to resonance in a gain transition of the first frequency characteristic and each of a plurality of peaks related to resonance in a gain transition of the second frequency characteristic.

### <Supplementary Note 12>

An adjustment device (10) that adjusts a servo parameter related to servo control of a motor (2), the adjustment device (10) including:
an acquisition unit (11) configured to acquire, in a target device (6) with the motor (2) attached, a frequency characteristic of the motor (2) under characteristic acquisition conditions related to the frequency characteristic of the motor (2) and including at least a first condition and a second condition different from each other;
a first adjustment unit (12) configured to interpolate, based on a first frequency characteristic (L1) corresponding to the first condition and a second frequency characteristic (L2) corresponding to the second condition, a third frequency characteristic (L3) which is a frequency characteristic corresponding to a predetermined section related to a resonance region in the frequency characteristic of the motor (2);
a second adjustment unit (12) configured to generate, based on the first frequency characteristic (L1), the second frequency characteristic (L2), and the third frequency characteristic (L3), a frequency characteristic block (L5, L15) serving as a reference for adjusting the servo parameter; and
a third adjustment unit (12) configured to adjust, based on the frequency characteristic block (L5, L15), the servo parameter.

### REFERENCE SIGNS LIST

2, 2x, 2y, 2x1, 2x2: Motor
3: Load
4: Servo driver
6: Target device
10: Adjustment device
11 : Acquisition unit
12: Adjustment unit

## Claims

1. An adjustment method for a servo parameter related to servo control of a motor, the adjustment method comprising:
a first step of acquiring, in a target device with the motor attached, a frequency characteristic of the motor under characteristic acquisition conditions related to the frequency characteristic of the motor and including at least a first condition and a second condition different from each other;
a second step of interpolating, based on a first frequency characteristic corresponding to the first condition and a second frequency characteristic corresponding to the second condition, a third frequency characteristic which is a frequency characteristic corresponding to a predetermined section related to a resonance region in the frequency characteristic of the motor;
a third step of generating, based on the first frequency characteristic, the second frequency characteristic, and the third frequency characteristic, a frequency characteristic block serving as a reference for adjusting the servo parameter, and
a fourth step of adjusting, based on the frequency characteristic block, the servo parameter.

2. The adjustment method for a servo parameter according to claim 1, wherein when a movable range of a load driven by the motor in the target device is limited to a finite range, the characteristic acquisition conditions are conditions for a position of the load in the movable range.

3. The adjustment method for a servo parameter according to claim 2, wherein
the first condition is a positional condition when the load is located at one end portion in the movable range, and
the second condition is a positional condition when the load is located at the other end portion in the movable range.

4. The adjustment method for a servo parameter according to claim 1, wherein
the characteristic acquisition conditions are conditions for an operation period of a device in a device group having the same specification as the target device, and
the first condition and the second condition are conditions for respective operation periods of a first device and a second device that are different from each other in the device group.

5. The adjustment method for a servo parameter according to any one of claims 1 to 4, wherein
the frequency characteristic includes a characteristic related to a gain,
in the second step,
a first peak related to resonance in a gain transition of the first frequency characteristic and a second peak related to resonance in a gain transition of the second frequency characteristic are extracted, and
the third frequency characteristic is generated by linearly interpolating the first peak and the second peak with a section between a first frequency corresponding to the first peak and a second frequency corresponding to the second peak used as the predetermined section, and
in the third step,
a maximum gain transition at an individual frequency is generated as the frequency characteristic block from the gain transition of the first frequency characteristic, the gain transition of the second frequency characteristic, and a gain transition of the third frequency characteristic.

6. The adjustment method for a servo parameter according to claim 5, wherein
the frequency characteristic further includes a characteristic related to a phase, and
in the third step, a minimum phase shift at the individual frequency is generated from a phase shift of the first frequency characteristic and a phase shift of the second frequency characteristic, and the minimum phase shift is included in the frequency characteristic block.

7. The adjustment method for a servo parameter according to any one of claims 1 to 4, wherein
the frequency characteristic includes a characteristic related to a gain,
in the second step,
a first peak related to resonance in a gain transition of the first frequency characteristic and a second peak related to resonance in a gain transition of the second frequency characteristic are extracted, and
the third frequency characteristic is generated by performing interpolation so that a gain is larger than a reference gain transition obtained by linearly interpolating the first peak and the second peak with a section between a first frequency corresponding to the first peak and a second frequency corresponding to the second peak used as the predetermined section, and
in the third step,
a maximum gain transition at an individual frequency is generated as the frequency characteristic block from the gain transition of the first frequency characteristic, the gain transition of the second frequency characteristic, and a gain transition of the third frequency characteristic.

8. The adjustment method for a servo parameter according to claim 7, wherein
the frequency characteristic further includes a characteristic related to a phase, and
in the third step, a minimum phase shift at the individual frequency is generated from a phase shift of the first frequency characteristic and a phase shift of the second frequency characteristic, and the minimum phase shift is included in the frequency characteristic block.

9. The adjustment method for a servo parameter according to any one of claims 1 to 4, wherein
the frequency characteristic includes a characteristic related to a gain,
in the first step, a frequency characteristic of the motor is acquired as an additional frequency characteristic also under an additional condition different from the first condition and the second condition,
in the second step,
a first peak related to resonance in a gain transition of the first frequency characteristic, a second peak related to resonance in a gain transition of the second frequency characteristic, and an additional peak related to resonance in a gain transition of the additional frequency characteristic are extracted,
the predetermined section is determined based on the first peak, the second peak, and the additional peak, and the third frequency characteristic is generated by performing interpolation so as not to fall below the first peak, the second peak, and the additional peak in the predetermined section, and
in the third step,
a maximum gain transition at an individual frequency is generated as the frequency characteristic block from the gain transition of the first frequency characteristic, the gain transition of the second frequency characteristic, and a gain transition of the third frequency characteristic.

10. The adjustment method for a servo parameter according to any one of claims 1 to 4, wherein
the frequency characteristic includes a characteristic related to a gain,
in the second step, a plurality of the predetermined sections including at least a first section and a second section is specified, and the third frequency characteristic is interpolated in each of the plurality of the predetermined sections, and
in the third step, the frequency characteristic block is generated based on the first frequency characteristic, the second frequency characteristic, and the third frequency characteristic corresponding to each of the plurality of the predetermined sections.

11. The adjustment method for a servo parameter according to claim 10, wherein in the second step, the first section and the second section are specified based on a frequency difference between each of a plurality of peaks related to resonance in a gain transition of the first frequency characteristic and each of a plurality of peaks related to resonance in a gain transition of the second frequency characteristic.

12. An adjustment device that adjusts a servo parameter related to servo control of a motor, the adjustment device comprising:
an acquisition unit configured to acquire, in a target device with the motor attached, a frequency characteristic of the motor under characteristic acquisition conditions related to the frequency characteristic of the motor and including at least a first condition and a second condition different from each other;
a first adjustment unit configured to interpolate, based on a first frequency characteristic corresponding to the first condition and a second frequency characteristic corresponding to the second condition, a third frequency characteristic which is a frequency characteristic corresponding to a predetermined section related to a resonance region in the frequency characteristic of the motor;
a second adjustment unit configured to generate, based on the first frequency characteristic, the second frequency characteristic, and the third frequency characteristic, a frequency characteristic block serving as a reference for adjusting the servo parameter; and
a third adjustment unit configured to adjust, based on the frequency characteristic block, the servo parameter.
